# EUROPEAN PATENT APPLICATION

(11) **EP 2 295 755 A2**
(43) Date of publication of application: **16.03.2011**
(21) Application number: 10174596.6
(22) Date of filing: 31.08.2010
(51) Int. Cl.: F01N 3/20, F01N 3/08, F01N 3/035, F01N 3/28, F01N 3/30, F01N 3/36, F01N 9/00, F01N 13/02

(54) **Exhaust gas treatment system**

(30) Priority: 15.09.2009 JP 2009212667
(71) Applicant: Kabushiki Kaisha Toyota Jidoshokki, Kariya-shi, Aichi 448-8671 (JP)
(72) Inventor: Noritake, Kazuto, Kariya-shi Aichi 448-8671 (JP)
(74) Representative: TBK-Patent

(57) **Abstract**

An exhaust gas treatment system includes an exhaust passage through which exhaust gas from an internal combustion engine is allowed to flow, a selective catalytic reduction catalyst provided in the exhaust passage, a mixing chamber provided upstream of the selective catalytic reduction catalyst in the exhaust passage as viewed in the direction of exhaust gas flow, a fuel injection valve for injection of fuel, an air injection valve for injection of air, and a urea water injection valve for injection of urea water. The fuel injection valve, the air injection valve and the urea water injection valve each has an injection port directed to the mixing chamber.

## Description

### BACKGROUND OF THE INVENTION

The present invention relates to an exhaust gas treatment system, and more particularly to an exhaust gas treatment system including an injection valve for injecting urea water into exhaust gas and a selective catalytic reduction catalyst.

A conventional exhaust gas treatment system is disclosed in Japanese Unexamined Patent Application Publication No. 2009-68424. The system includes an exhaust passage through which engine exhaust gas flows, a diesel particulate filter (DPF) provided in the exhaust passage, a urea SCR catalyst located downstream of the DPF in the exhaust passage as viewed in the direction, of exhaust gas flow, and an ammonia oxidation catalyst located downstream of the urea SCR catalyst. The system further includes an injection nozzle for supplying urea water into the exhaust passage and a burner for accelerating activation of the SCR catalyst. The injection nozzle is provided between the DPF and the urea SCR catalyst, and the burner is provided upstream of the DPF in the exhaust passage. In the system, use of combustion heat produced by the burner shortens the time it takes to activate the SCR catalyst after a cold start of the engine, resulting in shortening of the time it takes to start NOx reduction.

In the system, however, since the burner is located apart from the injection nozzle, the combustion space of the burner needs to be provided in the exhaust passage separately from the mixing space for mixing urea water and exhaust gas. In this case, the combustion space needs to be provided with a structure or means for accelerating uniform mixing of fuel and exhaust gas, and the mixing space needs to be provided with a structure such as a mixer for uniform mixing of urea water and exhaust gas. Thus, the combustion space and the mixing space provided separately in the exhaust passage results in increased entire length of the exhaust passage. This leads not only to increased size of the system but also to increased heat loss by radiation in the exhaust passage.

The present invention is directed to providing an exhaust gas treatment system that allows shortening of the entire length of an exhaust passage and also allows uniform mixing of urea water and combustion gas resulting from the combustion of fuel.

### SUMMARY OF THE INVENTION

In accordance with an aspect of the present invention, an exhaust gas treatment system includes an exhaust passage through which exhaust gas from an internal combustion engine is allowed to flow, a selective catalytic reduction catalyst provided in the exhaust passage, a mixing chamber provided upstream of the selective catalytic reduction catalyst in the exhaust passage as viewed in the direction of exhaust gas flow, a fuel injection valve for injection of fuel, an air injection valve for injection of air, and a urea water injection valve for injection of urea water. The fuel injection valve, the air injection valve and the urea water injection valve each has an injection port directed to the mixing chamber.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic view of an engine equipped with an exhaust gas treatment system according to a first embodiment of the present invention;
Fig. 2 is an enlarged fragmentary sectional view of the exhaust gas treatment system of Fig. 1;
Fig. 3 is a cross-sectional view taken along the line III-III of Fig. 2;
Fig. 4 is a fragmentary sectional view of an exhaust gas treatment system according to a second embodiment of the present invention; and
Fig. 5 is a cross-sectional view taken along the line V-V of Fig. 4.

### DETAILED DESCRIPTION OF THE PREFERRED EMBODIMENTS

The following will describe the embodiments of the exhaust gas treatment system according to the present invention with reference to the accompanying drawings. In the embodiments, the exhaust gas treatment system is intended to be installed in a vehicle with a diesel engine as an internal combustion engine.

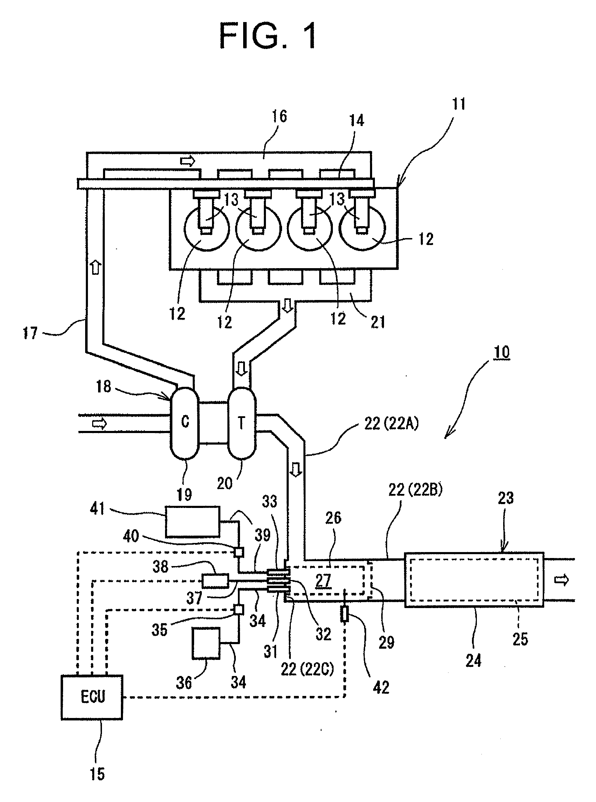

Referring to Fig. 1, the engine 11, which is equipped with an exhaust gas treatment system 10, has plural cylinders 12 into which fuel is injected from respective fuel injectors 13 that are connected to a common rail 14 where fuel is stored at a high pressure. The engine 11 is operated under the control of an engine control unit (ECU) 15. Although not shown in the drawings, the ECU 15 includes microprocessors for calculation, ROMs and RAMs for storing data and programs, and interfaces for connection to other devices.

An intake passage 17 is connected to an intake manifold 16 of the engine 11, and an exhaust passage 22 is connected to an exhaust manifold 21 of the engine 11. The engine 11 is equipped with a turbocharger 18 that uses exhaust gas to increase intake pressure. The turbocharger 18 has a compressor 19 provided in the intake passage 17 and a turbine 20 provided in the exhaust passage 22.

Part of the exhaust passage 22 located downstream of the turbine 20 of the turbocharger 18 as viewed in the direction of exhaust gas flow has a bend where the direction of exhaust gas flow is bent at a right angle. In the following description, the part of the exhaust passage 22 located upstream of the bend will be hereinafter referred to as the upstream exhaust passage 22A, and the part of the exhaust passage 22 located downstream of the bend will be hereinafter referred to as the downstream exhaust passage 22B. There is provided in the downstream exhaust passage 22B a selective catalytic reduction (SCR) catalyst 23. The SCR catalyst 23 includes a casing 24 accommodating therein a filter 25 (particulate filter) that serves as a DPF for capturing particulate matter (PM) in exhaust gas passing therethrough. The filter 25 supports thereon a catalytic component that accelerates selective catalytic reaction between NOx in exhaust gas and ammonia as a reducing agent, serving to remove NOx.

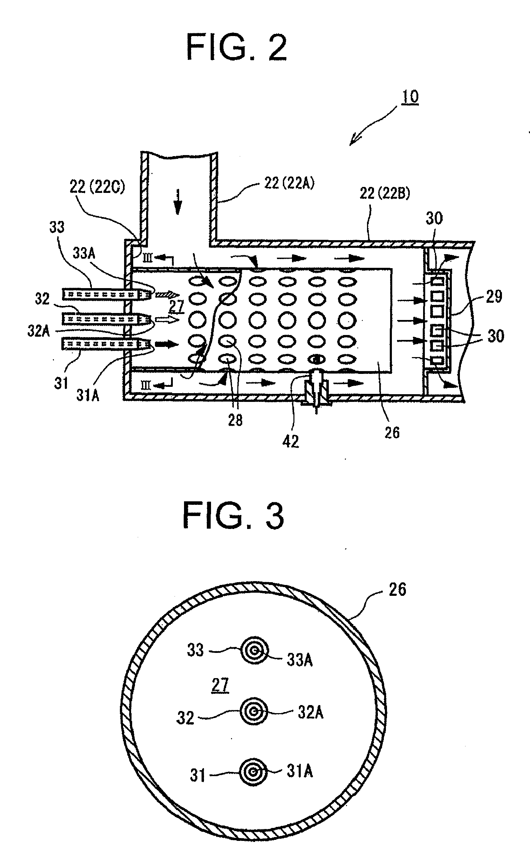

Referring to Fig. 2, the upstream exhaust passage 22A and the downstream exhaust passage 22B are of a cylindrical shape, and the upstream end of the downstream exhaust passage 22B is closed by a planar end wall 22C. The upstream exhaust passage 22A is connected to the downstream exhaust passage 22B at a position adjacent to the end wall 22C so as to be perpendicular to the peripheral wall of the downstream exhaust passage 22B. The downstream exhaust passage 22B accommodates therein a cylindrical partition member 26 that is concentric with the downstream exhaust passage 22B. The outer diameter of the partition member 26 is smaller than the inner diameter of the downstream exhaust passage 22B. The partition member 26 is mounted at one end to the end wall 22C of the downstream exhaust passage 22B and opened at the other end to the interior of the downstream exhaust passage 22B. That is, the upstream end of the partition member 26 is closed by the end wall 22C, and the downstream end of the partition member 26 is opened. The partition member 26 forms therein a mixing chamber 27. The partition member 26 has plural circular openings 28 formed therein for allowing exhaust gas to flow into the mixing chamber 27. The mixing chamber 27 is provided upstream of the SCR catalyst 23 in the downstream exhaust passage 22B as viewed in the direction of exhaust gas flow. The downstream exhaust passage 22B cooperates with the partition member 26 to form a space between the inner peripheral surface of the downstream exhaust passage 22B and the outer peripheral surface of the partition member 26. Exhaust gas introduced into the downstream exhaust passage 22B flows through the space and further through the openings 28 of the partition member 26 into the mixing chamber 27. A baffle plate 29 with plural holes 30 is provided downstream of the partition member 26 in the downstream exhaust passage 22B. The baffle plate 29 is provided between the mixing chamber 27 and the SCR catalyst 23. The baffle plate 29 serves to uniformly mix exhaust gas and combustion gas flowing therethrough.

The exhaust gas treatment system 10 includes a fuel injection valve 31, an air injection valve 32 and a urea water injection valve 33 which are mounted to the end wall 22C of the downstream exhaust passage 22B so as to be directed toward the mixing chamber 27. The fuel injection valve 31, the air injection valve 32 and the urea water injection valve 33 are arranged in parallel to one another so that the air injection valve 32 is located between the fuel injection valve 31 and the urea water injection valve 33. The injection directions of the fuel injection valve 31, the air injection valve 32 and the urea water injection valve 33 are substantially parallel to the direction of exhaust gas flow (horizontal direction in Figs. 1 and 2) in the downstream exhaust passage 22B. The injection ports 31A, 32A and 33A of the respective injection valves 31, 32 and 33 are aligned in vertical direction, as shown in Fig. 3. The injection ports 31A, 32A and 33A of the respective injection valves 31, 32 and 33 are directed to the mixing chamber 27, as shown in Figs. 2 and 3.

As shown in Fig. 1, the fuel injection valve 31 is connected through a fuel pipe 34 to a fuel tank 36. The fuel pipe 34 is provided with a fuel pump 35 by which the amount of fuel to be injected is controlled. With the operation of the fuel pump 35, fuel is supplied from the fuel tank 36 through the fuel pipe 34 to the fuel injection valve 31 and then injected in the form of a mist into the mixing chamber 27. The fuel pump 35 is connected to the ECU 15, and the fuel injection valve 31 is operated under the control of the ECU 15. Fuel for injection from the fuel injection valve 31 is diesel fuel used for the engine 11.

The air injection valve 32 is connected through an air pipe 37 to an air pump 38. With the operation of the air pump 38, air is supplied from the air pump 38 to the air injection valve 32 and then injected into the mixing chamber 27. The air pump 38 is connected to the ECU 15, and the air injection valve 32 is operated under the control of the ECU 15. The air injection valve 32 is operated simultaneously with the fuel injection valve 31.

The urea water injection valve 33 is connected through a urea water pipe 39 to a urea water tank 41. The urea water pipe 39 is provided with a urea water pump 40 by which the amount of urea water to be injected is controlled. With the operation of the urea water pump 40, urea water is supplied from the urea water tank 41 through the urea water pipe 39 to the urea water injection valve 33 and then injected in the form of a mist into the mixing chamber 27. The urea water pump 40 is connected to the ECU 15, and the urea water injection valve 33 is operated under the control of the ECU 15.

The exhaust gas treatment system 10 further includes an igniter 42 for igniting fuel injected into the mixing chamber 27. The igniter 42 is provided in the downstream region of the mixing chamber 27. The igniter 42 is connected to and operated under the control of the ECU 15. When fuel is ignited by the igniter 42, flame is produced in the mixing chamber 27. When the injection of fuel is continued, the flaming occurs continuously.

The exhaust gas treatment system 10 mainly includes the exhaust passage 22, the SCR catalyst 23 integrated with the filter 25, the partition member 26, the baffle plate 29, the fuel injection valve 31, the air injection valve 32 and the urea water injection valve 33, and further includes the ECU 15 and the igniter 42.

The following will describe the operation of the exhaust gas treatment system 10.

Exhaust gas resulting from the combustion in the cylinders 12 of the engine 11 is delivered through the exhaust manifold 21 to the exhaust passage 22 and passes through the turbine 20 of the turbocharger 18. The direction of exhaust gas flow is bent at a right angle toward the SCR catalyst 23 at the connection between the upstream and downstream exhaust passages 22A and 22B, and the exhaust gas flows through the SCR catalyst 23

When flame is produced in the mixing chamber 27, the fuel pump 35, the air pump 38, the urea water pump 40 and the igniter 42 are operated under the control of the ECU 15 so that fuel, air and urea water are injected simultaneously into the mixing chamber 27 from the respective injection valves 31, 32 and 33 and the injected fuel is ignited by the igniter 42. In the mixing chamber 27, the injected fuel, air and urea water are mixed not only with one another but also with the exhaust gas flowing into the mixing chamber 27 through the openings 28 of the partition member 26, so that the injected fuel, air and urea water are heated by the exhaust gas, which makes it easy for the igniter 42 to ignite the fuel so as to produce flame. Flaming in the mixing chamber 27 is continued when fuel injection is continued.

When fuel and urea water are injected simultaneously under the control of the ECU 15, hydrolysis of urea water proceeds just after the fuel ignition by the heat of the combustion gas flame and water vapor in exhaust gas, so that ammonia is produced. When the combustion of fuel is continued, the injection of air by the air injection valve 32 is also continued. In the present embodiment wherein the urea water injection valve 33 is located apart from the fuel injection valve 31 and adjacent to the air injection valve 32, the injected air prevents the urea water injection valve 33 from receiving heat directly from the flame produced in a region downstream of the fuel injection valve 31. Thus, even when the injection of fuel is continued in the mixing chamber 27, overheating of the urea water injection valve 33 is prevented.

In a region downstream of the mixing chamber 27, the combustion gas resulting from the combustion of fuel in the mixing chamber 27 and containing urea water passes through the baffle plate 29 along with the exhaust gas having flowed through the space outside the mixing chamber 27. The combustion gas and the exhaust gas are mixed uniformly by the baffle plate 29, and then the mixture of gases passes through the SCR catalyst 23.

The SCR catalyst 23 receives heat from the mixture of gases to reach a temperature at which the SCR catalyst 23, that is, the ,catalytic component supported on the filter 25, becomes active, so that NOx and ammonia contained in the mixture are removed by selective catalytic reaction in the reaction region of the catalytic component. In addition, PM contained in the mixture is captured and collected by the filter 25 integrated with the SCR catalyst 23. Thus, exhaust gas purification is achieved by the removal of NOx through the reducing reaction between ammonia and NOx and the capture of PM in the SCR catalyst 23.

Although in the present embodiment fuel and urea water are injected simultaneously into the mixing chamber 27, urea water may be injected after the injection of fuel. In this case, the injected fuel and air are mixed with exhaust gas and heated by the exhaust gas, which makes it easier for the igniter 42 to ignite the fuel, so that flame is reliably produced by the combustion of fuel. When urea water is injected after the injected fuel is adequately combusted, the urea water is heated by the combustion gas flame and hydrolyzed by water vapor in the exhaust gas. Even when urea water is injected after an elapse of time subsequent to the production of flame, the reducing reaction between NOx and ammonia adsorbed on the catalytic component occurs in the SCR catalyst 23 that has been activated by high temperature gases, which prevents NOx from passing through the SCR catalyst 23 without being removed.

In the present embodiment, the filer 25 integrated with the SCR catalyst 23 serves as a DPF. Since excessive accumulation of PM on the filter 25 may cause filter plugging, the filter 25 needs to be regenerated when a predetermined amount of PM is accumulated on the filter 25. The amount of PM accumulation can be determined, for example, based on the difference of exhaust gas pressure between the upstream and downstream ends of the SCR catalyst 23. When it is determined by the ECU 15 that the filter 15 needs to be regenerated, fuel and air are injected into the mixing chamber 27, and flame is produced in the mixing chamber 27 by the igniter 42. Then high-temperature combustion gas resulting from the combustion in the mixing chamber 27 passes through the filter 25 in the SCR catalyst 23, so that PM is burned off and the filter 25 is regenerated.

During a cold start of the engine, fuel and air are injected into the mixing chamber 27 so as to produce flame, but urea water needs not to be injected immediately. This is because exhaust gas temperature just after a cold start of the engine is low and NOx is not produced in the exhaust gas. Since exhaust gas temperature is increased gradually after a cold start of the engine, urea water is injected, for example, when the exhaust gas reaches a temperature at which NOx starts to be produced. On the other hand, urea water may be injected since the time when the engine is started. In this case, the temperature of the SCR catalyst 23 is then low, and the ammonia produced by hydrolysis of urea water is adsorbed on the catalytic component of the SCR catalyst 23.

The exhaust gas treatment system 10 according to the first embodiment offers the following advantages.
(1) Since fuel, air and urea water are injected into the mixing chamber 27, the injected fuel is combusted in the mixing chamber 27 to produce flame, and the combustion gas is mixed with the injected urea water. The heat of the combustion gas accelerates the hydrolysis of urea water into ammonia in the exhaust passage 22. The mixing chamber 27 formed in the exhaust passage 22 is used not only for combustion of fuel but also for mixing of combustion gas and urea water, which allows shortening of the entire length of the exhaust passage 22 and also allows uniform mixing of combustion gas and urea water.
(2) The air injection valve 32 is located between the fuel injection valve 31 and the urea water injection valve 33 so that the urea water injection valve 33 is spaced apart from the fuel injection valve 31 and located adjacent to the air injection valve 32. This allows cooling of the urea water injection valve 33 by injection of air, thereby preventing overheating of the urea water injection valve 33.
(3) Exhaust gas is introduced into the mixing chamber 27 and mixed with the injected fuel and air, which allows the fuel and air to be heated by the exhaust gas and to combust easily.
(4) The SCR catalyst 23 integrated with the filter 25 (DPF) allows further shortening of the entire length of the exhaust passage 22. In addition, the heat resulting from the combustion in the mixing chamber 27 can be used for regeneration of the filter 25.
(5) Simultaneous injection of fuel and urea water allows uniform mixing of fuel and urea water. In this case, since the urea water receives the heat of the combustion gas simultaneously with the combustion of the fuel, hydrolysis of urea water is accelerated by the heat, and ammonia is produced easily. On the other hand, when the fuel is combusted and then the urea water is mixed with the combustion gas, the fuel is adequately combusted, so that hydrolysis of urea water is further accelerated by the heat of the combustion gas.
(6) Flame is produced in the mixing chamber 27 by combustion of fuel, and the heat of the combustion gas can be used to regenerate the filter 25.

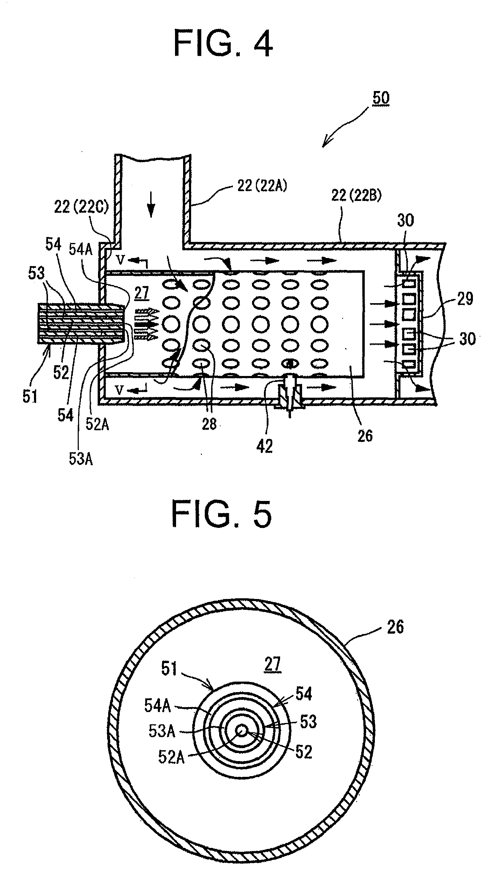

Figs. 4 and 5 show the second embodiment of the present invention. In the drawings, same reference numerals are used for the common elements or components in the first and second embodiments, and the description of such elements or components for the second embodiment will be omitted.

As shown in Fig. 4, the exhaust gas treatment system 50 includes a multiple valve unit 51 having a fuel injection valve, an air injection valve and a urea water injection valve integrated as one unit. A fuel passage 52 is formed in the center of the multiple valve unit 51, extending through the central axis of the multiple valve unit 51. The fuel passage 52 is opened at one end to the mixing chamber 27 so as to form a fuel injection valve having an injection port 52A directed to the mixing chamber 27. The other end of the fuel passage 52 is connected through the fuel pipe 34 to the fuel pump 35 (see Fig. 1).

As shown in Fig. 5, an air passage 53 with annular cross section is located concentrically with and radially outward of the fuel passage 52. The air passage 53 is opened at one end to the mixing chamber 27 so as to form an air injection valve having an injection port 53A directed to the mixing chamber 27. The other end of the air passage 53 is connected through the air pipe 37 to the air pump 38 (see Fig. 1).

A urea water passage 54 with annular cross section is concentric with the fuel passage 52 and located radially outward of the air passage 53. The urea water passage 54 is opened at one end to the mixing chamber 27 so as to form a urea water injection valve having an injection port 54A directed to the mixing chamber 27. The other end of the urea water passage 54 is connected to the urea water tank 41 through the urea water pipe 39 provided with the urea water pump 40 (see Fig. 1).

The multiple valve unit 51 is provided in the end wall 22C of the downstream exhaust passage 22B so that fuel, air and urea water are injected into the mixing chamber 27. The injection directions of fuel, air and urea water are substantially parallel to the direction of exhaust gas flow in the downstream exhaust passage 22B.

According to the second embodiment wherein the fuel injection valve, the air injection valve and the urea water injection valve are integrated in the multiple valve unit 51, the number of parts of the system can be reduced, and such injection valves can be provided at a time so as to be directed toward the mixing chamber 27. Further, the air passage 53 is located between the fuel passage 52 and the urea water passage 54 so that the urea water passage 54 is spaced apart from and located radially outward of and the fuel passage 52. In this case, the injected air prevents the urea water passage 54 from receiving heat directly from the fuel passage 52, thereby preventing .overheating of the urea water passage 54.

The above embodiments may be modified in various ways as exemplified below.

An oxidation catalyst may be provided downstream of the SCR catalyst 23 in the exhaust passage 22 so as to remove the excessive ammonia produced from urea water and the ammonia released from the SCR catalyst 23.

Although in the first and second embodiments the filter 25 in the SCR catalyst 23 serves not only as a particulate filter for capturing PM but also as a selective catalytic reduction catalyst, the particulate filter may be provided separately from the selective catalytic reduction catalyst.

Although in the first and second embodiments the mixing chamber 27 is formed by the cylindrical partition member 26 with the circular openings 28, the partition member may be of any shape or structure so as to form the mixing chamber in which fuel, air, urea water, and exhaust gas can be mixed. In addition, the openings 28 of the partition member 26 for introducing exhaust gas into the mixing chamber 27 may be replaced with slits or mesh structure.

Although in the first and second embodiments the partition member 26 is provided separately from the baffle plate 29, the partition member and the baffle plate may be integrated.

The baffle plate 29 may be omitted when exhaust gas can be mixed uniformly with combustion gas in a region downstream of the mixing chamber 27 without using the baffle plate 29.

The baffle plate 29 may be of any shape or structure so as to mix the gases uniformly.

In the first and second embodiments, the simultaneous injection of fuel, air and urea water, the simultaneous injection of fuel and air, and the injection of urea water after the simultaneous injection of fuel and air are described. Alternatively, only the urea water may be injected depending on the engine operating conditions.

In the first embodiment, the injection valves 31, 32, 33 are arranged in parallel to one another so that the injection ports 31A, 32A, 33A of the respective injection valves 31, 32, 33 are aligned in vertical direction. Alternatively, the injection ports 31A, 32A, 33A may be aligned in any direction, or the injection valves 31, 32, 33 may be arranged in any order.

In the second embodiment, the fuel passage 52, the air passage 53 and the urea water passage 54 are concentric with one another in the multiple valve unit 51. Alternatively, the multiple valve unit 51 may have such a structure that the fuel passage, the air passage and the urea water passage are at the same distance from the central axis of the multiple valve unit 51 and the passages are angularly spaced at regular intervals. In addition, the multiple valve unit 51 may have such a structure that the fuel injection valve 31, the air injection valve 32 and the urea water injection valve 33 in the first embodiment are simply integrated.

An exhaust gas treatment system includes an exhaust passage through which exhaust gas from an internal combustion engine is allowed to flow, a selective catalytic reduction catalyst provided in the exhaust passage, a mixing chamber provided upstream of the selective catalytic reduction catalyst in the exhaust passage as viewed in the direction of exhaust gas flow, a fuel injection valve for injection of fuel, an air injection valve for injection of air, and a urea water injection valve for injection of urea water. The fuel injection valve, the air injection valve and the urea water injection valve each has an injection port directed to the mixing chamber.

## Claims

1. An exhaust gas treatment system, comprising:
an exhaust passage (22) through which exhaust gas from an internal combustion engine (11) is allowed to flow; and
a selective catalytic reduction catalyst (23) provided in the exhaust passage (22),
**characterized by**
a mixing chamber (27) provided upstream of the selective catalytic reduction catalyst (23) in the exhaust passage (22) as viewed in the direction of exhaust gas flow;
a fuel injection valve (31) for injection of fuel;
an air injection valve (32) for injection of air; and
a urea water injection valve (33) for injection of urea water,
wherein the fuel injection valve (31), the air injection valve (32) and the urea water injection valve (33) each has an injection port (31A, 32A, 33A) directed to the mixing chamber (27).

2. The exhaust gas treatment system according to claim 1, wherein the fuel injection valve (31), the air injection valve (32) and the urea water injection valve (33) are arranged parallel to one another, and the air injection valve (32) is located between the fuel injection valve (31) and the urea water injection valve (33).

3. The exhaust gas treatment system according to claim 1 or 2, wherein the fuel injection valve (52), the air injection valve (53) and the urea water injection valve (54) are integrated in one unit.

4. The exhaust gas treatment system according to any one of claims 1 through 3, wherein the injection directions of the fuel injection valve (31), the air injection valve (32) and the urea water injection valve (33) are substantially parallel to the direction of exhaust gas flow in the exhaust passage (22).

5. The exhaust gas treatment system according to any one of claims 1 through 4, further comprising a partition member (26) provided in the exhaust passage (22), the partition member (26) forming therein the mixing chamber (27) and having openings (28) for introducing exhaust gas from the outside to the inside of the mixing chamber (27).

6. The exhaust gas treatment system according to claim 5, wherein the partition member (26) is of a cylindrical shape and concentric with the exhaust passage (22).

7. The exhaust gas treatment system according to claim 5, wherein the partition member (26) is of a cylindrical shape, the upstream end of the partition member (26) being closed by an end wall (22C) where the fuel injection valve (31), the air injection valve (32) and the urea water injection valve (33) are mounted, the downstream end of the partition member (26) being opened.

8. The exhaust gas treatment system according to any one of claims 1 through 7, wherein the selective catalytic reduction catalyst (23) is integrated with a particulate filter (25) for capturing particulate matter.

9. The exhaust gas treatment system according to claim 8, further comprising a controller (15) by which the fuel injection valve (31) is operated so that fuel is injected when the particulate filter (25) needs to be regenerated.

10. The exhaust gas treatment system according to any one of claims 1 through 8, further comprising a controller (15) by which the fuel injection valve (31) and the urea water injection valve (33) are operated so that fuel and urea water are injected simultaneously

11. The exhaust gas treatment system according to any one of claims 1 through 8, further comprising a controller (15) by which the fuel injection valve (31) and the urea water injection valve (33) are operated so that urea water is injected after injection of fuel.

12. The exhaust gas treatment system according to any one of claims 1 through 8, further comprising a baffle plate (29) provided between the mixing chamber (27) and the selective catalytic reduction catalyst (23) for mixing of gases flowing therethrough.

13. The exhaust gas treatment system according to claim 1, wherein at least two of the injection ports (52A, 53A, 54A) has annular cross section, and the injection ports (52A, 53A, 54A) are all concentric with each other.
